# EUROPEAN PATENT APPLICATION

(11) **EP 4 358 364 A1**
(43) Date of publication of application: **24.04.2024**
(21) Application number: 22898744.2
(22) Date of filing: 13.07.2022
(51) Int. Cl.: H02J 50/50, H02J 50/60, H02J 50/12, H02J 50/00, H02J 50/90, H02J 50/80, H02J 7/00

(54) **ELECTRONIC DEVICE SUPPORTING WIRELESS CHARGING**

(30) Priority: 23.11.2021 KR 20210162531; 11.03.2022 KR 20220030570
(71) Applicant: Samsung Electronics Co., Ltd., Suwon-si, Gyeonggi-do 16677 (KR)
(72) Inventor: HA, Mincheol, Suwon-si, Gyeonggi-do 16677 (KR); KIM, Dongzo, Suwon-si, Gyeonggi-do 16677 (KR)
(74) Representative: Appleyard Lees IP LLP
(86) International application number: PCT/KR2022/010189
(87) International publication number: WO 2023/096059

(57) **Abstract**

A power relay device may be mounted to a cover which covers a portable power reception device, and may comprise: a coil; a power reception circuit which rectifies a power signal received from a power transmission device through the coil; a wireless communication circuit which is driven using the power signal received from the power reception circuit and communicates with the power transmission device and the power reception device by using the coil; and a relay control circuit which is driven using the power signal received from the power reception circuit and is electrically connected to the power reception circuit and the wireless communication circuit. The relay control circuit may be configured to: receive a first received power value indicating power consumed by the power reception device from the wireless communication circuit; and on the basis that the first received power value is received, transmit a second received power value indicating power consumed by the power relay device to the power transmission device by using the wireless communication circuit.

## Description

### [Technical Field]

An embodiment of the disclosure relates to a technique for wirelessly supplying power from a power transmission device to a power reception device in a wireless charging system.

### [Background Art]

A battery may be charged using a coil in a wireless charging system. For example, a battery of a portable power reception device (e.g., a smartphone or a wireless earphone charging case (or cradle)) may be charged with a reception coil of the power reception device being in proximity of a transmission coil of a power transmission device (e.g., a wireless charging pad).

### [Disclosure of Invention]

### [Technical Problem]

A user may carry a power reception device with a cover put thereon to protect the power reception device. However, when the cover is put on the power reception device, the distance between a transmission coil and a reception coil may be increased, for example, by the thickness of the cover. Accordingly, even though the coils are aligned, power reception efficiency of the power reception device may be reduced.

The cover may include a load that consumes power. A battery for operating the load may be additionally provided in the cover. Alternatively, the load may operate by power received from the power reception device. However, the load may not be supplied with power from the power reception device while the power reception device is charged, thus making it difficult to operate the load.

An embodiment of the disclosure may provide a power relay device that is provided in a cover covering a power reception device, wirelessly receives power from a power transmission device, and wirelessly transmits the received power to the power reception device, thereby increasing power reception efficiency of the power reception device.

According to an embodiment of the disclosure, the power transmission device may recognize that the power relay device exists between the power transmission device and the power reception device, and may control power transmission, based on existence of the power relay device.

Further, in an embodiment of the disclosure, the power relay device may perform an operation related to power reception (e.g., an operation of notifying a user of a charging state or a heat control operation) while power is transmitted from the power transmission device to the power reception device.

Technical aspects to be achieved in the disclosure are not limited to the technical aspects mentioned above, and other technical aspects not mentioned will be clearly understood by those skilled in the art from the following description.

### [Solution to Problem]

According to an embodiment, a power relay device may be mounted on a cover that covers a portable power reception device, and may include: a coil; a power reception circuit configured to rectify a power signal received from a power transmission device through the coil; a wireless communication circuit configured to be driven using the power signal received from the power reception circuit and to communicate with the power transmission device and the power reception device using the coil; and a relay control circuit configured to be driven using the power signal received from the power reception circuit and electrically connected to the power reception circuit and the wireless communication circuit. The relay control circuit may be configured to receive a first received power value indicating power consumed by the power reception device from the wireless communication circuit. The relay control circuit may be configured to transmit a second received power value indicating power consumed by the power relay device to the power transmission device using the wireless communication circuit, based on receiving the first received power value.

According to an embodiment, a power transmission device may include: a coil; a power transmission circuit configured to convert a power signal into a power signal having a designated frequency and to output the power signal to the coil; a wireless communication circuit configured to communicate with a power reception device and a power relay device using the coil; and a transmission control circuit electrically connected to the power transmission circuit and the wireless communication circuit. The transmission control circuit may be configured to identify a supplied power value indicating power that the power transmission device supplies to the power reception device. The transmission control circuit may be configured to identify a first received power value indicating power consumed by the power reception device and a second received power value indicating power consumed by the power relay device from the wireless communication circuit. The transmission control circuit may be configured to determine that a metallic foreign substance exists in addition to the power relay device between the power transmission device and the power reception device, based on the supplied power value, the first received power value, and the second received power value. The transmission control circuit may be configured to control the power transmission circuit to stop outputting the power signal based on the determination.

According to an embodiment, a power relay device may be mounted on a cover covering a portable power reception device, may include a coil, and may be driven using a power signal received from a power transmission device through the coil. A method for operating the power relay device may include receiving a first received power value indicating power consumed by the power reception device from the power reception device through the coil. The method may include transmitting a second received power value indicating power consumed by the power relay device to the power transmission device through the coil, based on receiving the first received power value.

According to an embodiment, a method for operating a power transmission device that wirelessly transmits a power signal to a power reception device through a coil may include identifying a supplied power value indicating power that the power transmission device supplies to the power reception device. The method may include identifying a first received power value indicating power consumed by the power reception device and a second received power value indicating power consumed by a power relay device through a wireless communication circuit of the power transmission device. The method may include determining that a metallic foreign substance exists in addition to the power relay device between the power transmission device and the power reception device, based on the supplied power value, the first received power value, and the second received power value. The method may include stopping outputting the power signal based on the determination.

According to an embodiment, a recording medium may store instructions readable by a processor of a power transmission device that wirelessly transmits a power signal to a power reception device through a coil. When executed by the processor, the instructions may cause the processor to perform an operation of identifying a supplied power value indicating power that the power transmission device supplies to the power reception device. The instructions may cause the processor to perform an operation of identifying a first received power value indicating power consumed by the power reception device and a second received power value indicating power consumed by a power relay device through a wireless communication circuit of the power transmission device. The instructions may cause the processor to perform an operation of determining that a metallic foreign substance exists in addition to the power relay device between the power transmission device and the power reception device, based on the supplied power value, the first received power value, and the second received power value. The instructions may cause the processor to perform an operation of stopping outputting the power signal based on the determination.

### [Advantageous Effects of invention]

According to embodiments of the disclosure, it is possible to charge a battery of a power reception device using a power relay device in a state of putting a cover on the power reception device. The power relay device may perform an operation related to power reception (e.g., an exchange of data related to charging power, an operation of notifying a user of a charging state or a heat control operation) while the power reception device receives power from a power transmission device. Further, a problem of the power transmission device misrecognizing the power relay device as a metallic foreign substance may be resolved. In addition, various effects directly or indirectly identified through this document may be provided.

### [Brief Description of Drawings]

FIG. 1 is a block diagram of an electronic device in a network environment according to various embodiments;
FIG. 2 is a block diagram of electronic devices in a wireless charging system according to an embodiment;
FIG. 3 is a layout diagram of a wireless charging pad, a smartphone, and a protective cover covering the smartphone in a wireless charging system according to an embodiment;
FIG. 4 is a layout diagram of a wireless charging pad, a wireless earphone charging case, and a protective cover covering the wireless earphone charging case in a wireless charging system according to an embodiment;
FIG. 5 is a layout diagram of coils for wireless charging in a wireless charging system according to an embodiment;
FIG. 6 illustrates an example of a power signal with an amplitude modulated for data communication in a wireless communication system according to an embodiment;
FIG. 7 is a flowchart illustrating operations of a relay control circuit according to an embodiment;
FIG. 8 is a flowchart illustrating operations of a relay control circuit according to an embodiment;
FIG. 9 is a flowchart illustrating operations of a relay control circuit according to an embodiment; and
FIG. 10 is a flowchart illustrating operations of a transmission control circuit according to an embodiment.

### [Mode for the Invention]

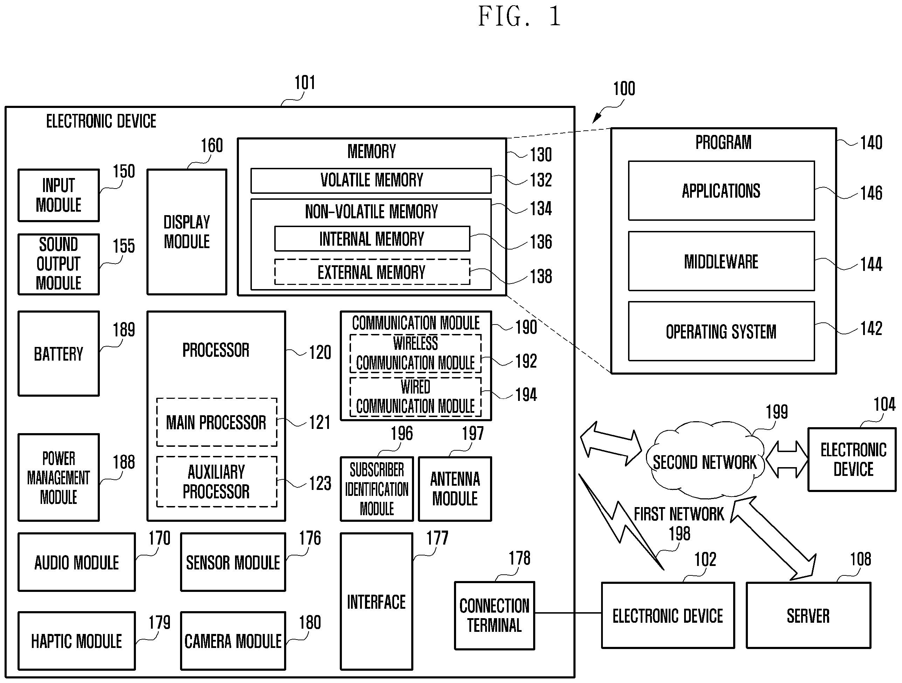

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

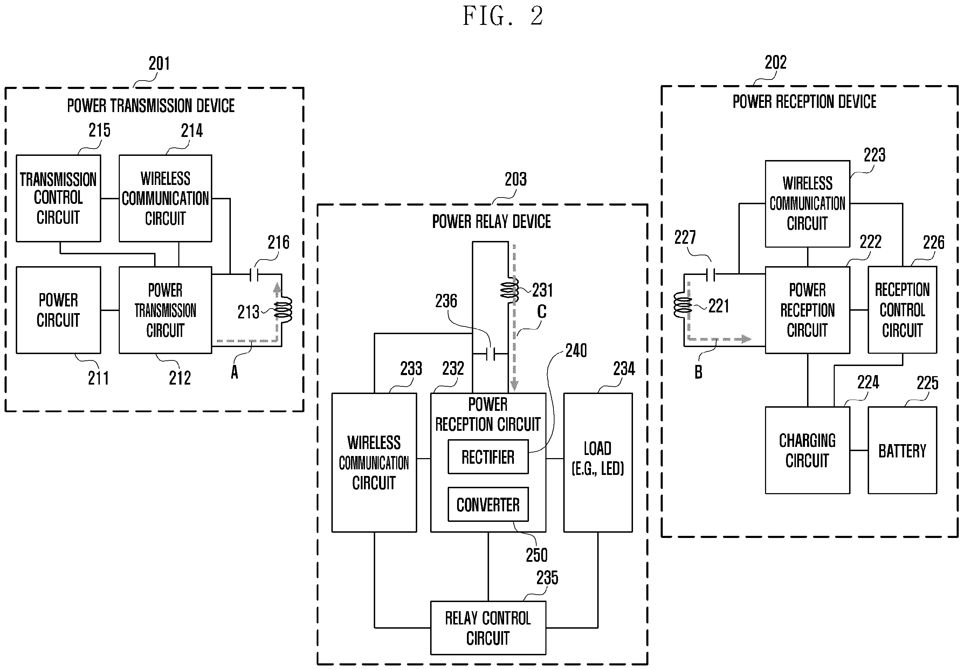

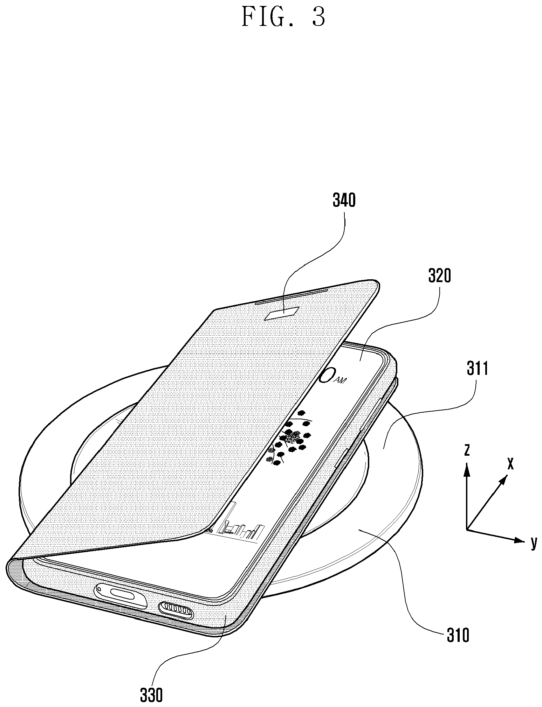

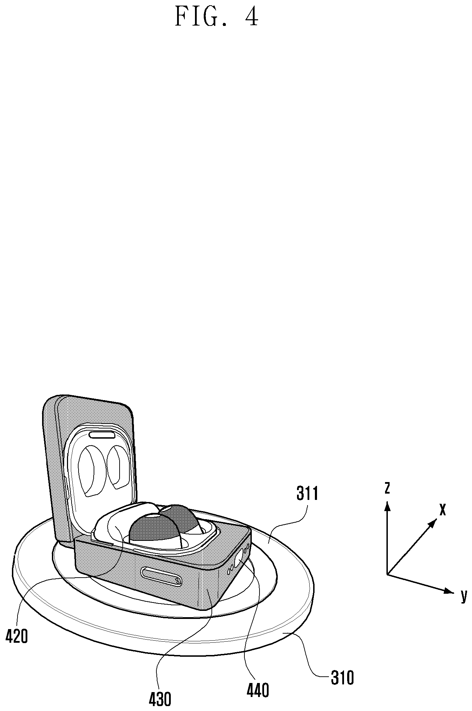

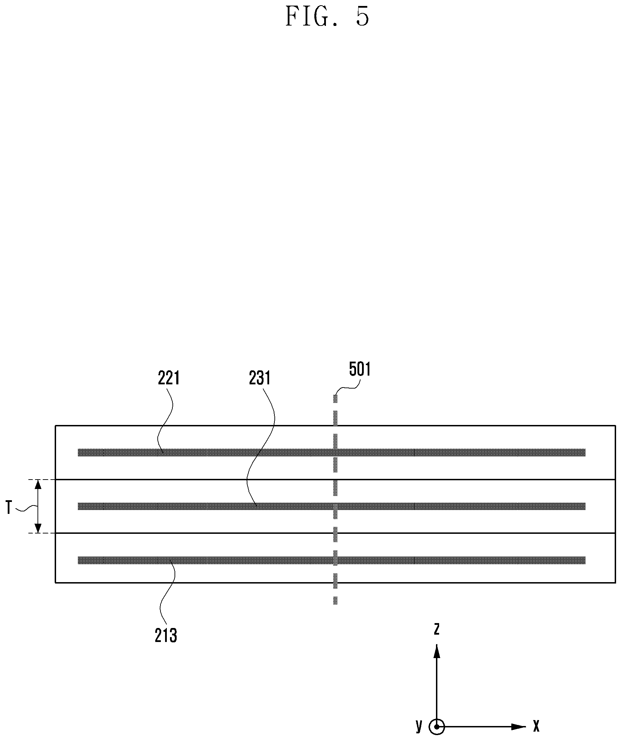

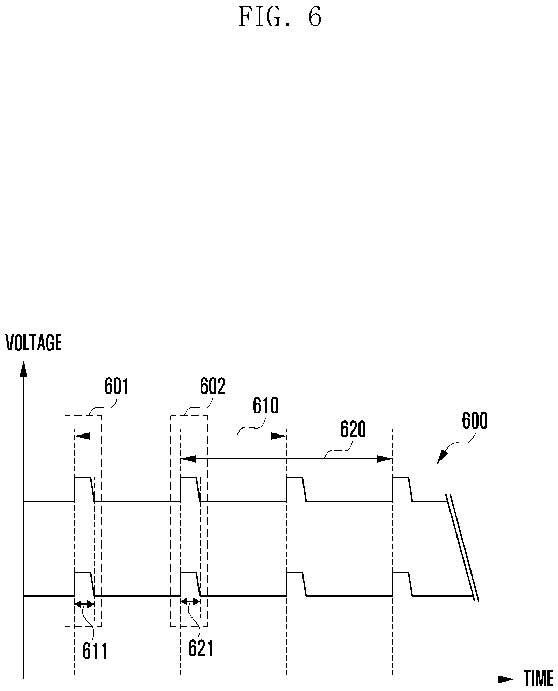

FIG. 2 is a block diagram of electronic devices 201, 202, and 203 in a wireless charging system according to an embodiment. FIG. 3 is a layout diagram of a wireless charging pad 310, a smartphone 320, and a protective cover 330 covering the smartphone 320 in a wireless charging system according to an embodiment. FIG. 4 is a layout diagram of a wireless charging pad 310, a wireless earphone charging case 420, and a protective cover 430 covering the case 420 in a wireless charging system according to an embodiment. FIG. 5 is a layout diagram of coils 510, 520, and 530 for wireless charging in a wireless charging system according to an embodiment. FIG. 6 illustrates an example of a power signal with an amplitude modulated for data communication in a wireless communication system according to an embodiment.

Referring to FIG. 2, a power transmission device (e.g., the electronic device 102 of FIG. 1) 201 may wirelessly transmit a power signal, and a power reception device (e.g., the electronic device 101 of FIG. 1) 202 may wirelessly receive a power signal. A power relay device 203 may wirelessly transmit most of energy of a power signal received from the power transmission device 201 to the power reception device 202, and may use some of the energy of the power signal received from the power transmission device 201 for driving the power relay device 203. The power transmission device 201 may be the wireless charging pad 310 having a shape illustrated in FIG. 3 and FIG. 4 or a portable electronic device that supports power sharing. For example, the portable electronic device may be a portable communication device (e.g., the smartphone 320 of FIG. 3), a portable multimedia device, a portable medical device, a camera, or a wearable device. The power reception device 202 may be a portable electronic device. For example, the power reception device 202 may be the smartphone 320 or the wireless earphone charging case 420. The power relay device 203 may be a device mounted on a protective cover (e.g., the protective cover 330 of FIG. 3 or the protective cover 430 of FIG. 4) covering the power reception device 202.

According to an embodiment, the power transmission device 201 may include a power source circuit 211, a power transmission circuit 212, a power transmission coil 213, a wireless communication circuit 214, and a transmission control circuit 215.

The power circuit 211 may provide a power signal to be transmitted to the power reception device 202 to the power transmission circuit 212. For example, the power circuit 211 may include an adapter that converts a current of a power signal input from the outside from an alternating current (AC) to a direct current (DC), and may adjust a voltage of power to a designated voltage value to output the voltage, based on control of the transmission control circuit 215.

The power transmission circuit 212 may be configured to convert a current characteristic of a power signal received from the power circuit 211 from a DC to an AC in order to wirelessly transmit the power signal through the power transmission coil 213. For example, the power transmission circuit 212 may include an inverter circuit (e.g., a full-bridge circuit) configured to periodically change a direction of a current. The power transmission coil 213 may resonate at a specific frequency. For example, the power transmission device 201 may further include a resonance circuit 216 to enable the power transmission coil 213 to resonate at a specific frequency (e.g., a frequency specified in a Wireless Power Consortium (WPC) standard). The inverter circuit may periodically change a current direction of a first power signal received from the power circuit 211 according to a resonant frequency of the power transmission coil 213 to generate a second power signal having the resonant frequency, and may output the second power signal to the power transmission coil 213. Accordingly, the second power signal may be wirelessly transmitted to the power reception device 102 through the power transmission coil 213. The power transmission circuit 212 may include a current regulation circuit (e.g., a low-dropout (LDO) regulator) that adjusts a current of the second power signal to transmit the current to the power transmission coil 213, based on control of the transmission control circuit 215.

The power transmission coil 213 may be a spiral coil wound a plurality times in a clockwise or counterclockwise direction around a z-axis (see FIG. 5). The power transmission coil 213 may be used as an antenna for data communication in addition to power transmission. Accordingly, the wireless communication circuit 214 may perform data communication with the power reception device 202 and/or the power relay device 203 through the power transmission coil 213. For example, the wireless communication circuit 214 may receive a data signal from the transmission control circuit 215, and may load the received data signal into a power signal to transmit the power signal to a wireless communication circuit 223 of the power reception device 202 and/or a wireless communication circuit 233 of the power relay device 203. A method for loading the data signal into the power signal may be, for example, a technique of modulating an amplitude and/or frequency of the power signal. The wireless communication circuit 214 may demodulate a power signal transmitted from the power transmission coil 213 to a power reception coil 221, thereby obtaining a data signal transmitted by the power reception device 202 and/or the power relay device 203 to the power transmission device 201. The wireless communication circuit 214 may transmit the obtained data signal to the transmission control circuit 215.

The transmission control circuit 215 may be configured as a single chipset along with a memory (not shown). When the power transmission device 201 is a portable electronic device that supports power sharing, a processor (e.g., the processor 120 of FIG. 1) or a power management circuit (e.g., the power management module 188 of FIG. 1) may operate as the transmission control circuit 215. The transmission control circuit 215 may control power delivery, based on information received from the power reception device 202 and/or the power relay device 203 through the wireless communication circuit 214. For example, the transmission control circuit 215 may control the power transmission circuit 212 to periodically transmit a power signal (e.g., a ping signal or a wake-up signal) for detecting an external object (e.g., the power reception device 202). The power reception device 202 may monitor a change in characteristics (e.g., a frequency and an amplitude) of the power signal through the wireless communication circuit 214, and may recognize that there is an object adjacent to the power transmission device 201 (e.g., at a position corresponding to the power transmission coil 213), based on the change in characteristics. Referring to FIG. 3 and FIG. 4, when an object is placed on a surface 311 of the wireless charging pad 310, a characteristic change may occur in a power signal transmitted to detect an external object. When variance satisfies a designated condition (e.g., when the variance is a threshold value or greater), the transmission control circuit 215 may recognize that an object, for example, the power reception device 202, is positioned on the surface 311. When the power reception device 202 is placed on the surface 311, the coils 213 and 221 may be electrically coupled, thereby supplying the power signal from the power transmission device 201 to the power reception device 202. When the power reception device 202 is recognized, the transmission control circuit 215 may transmit a message to the power reception device 202 through the wireless communication circuit 214. The message may include information that the power reception device 202 needs for wireless charging, content indicating what information that the power transmission device 201 requests from the power reception device 202 is, and/or information that the power reception device 202 requests from the power transmission device 201. For example, the information that the power transmission device 201 requests from the power reception device 202 through the message may include identification information about the power reception device 202 and/or configuration information related to wireless charging. The identification information may include version information, a manufacturing code, or a basic device identifier. The configuration information may include a wireless charging frequency, maximum receiveable power, or power requested from the power transmission device 201 for battery charging. The transmission control circuit 215 may receive the requested information as a response message from the power reception device 202 through the wireless communication circuit 214. The transmission control circuit 215 may control the power transmission circuit to transmit a power signal for battery charging, based on at least some of the identification information and/or the configuration information in the received response message.

According to an embodiment, the power transmission device 201 may identify a power control feedback signal from the power reception device 202. The power control feedback signal may include a control error packet (CEP) defined in the WPC standard. The control error packet may include a control error value (CEV). For example, the control error value may be an integer (e.g., -1, 0, or +1) between -128 and +127.

According to an embodiment, the transmission control circuit 215 may adjust a characteristic (e.g., voltage or current) of a power signal (A) or terminate transmission of a power signal, based on a control signal received from the power reception device 202, while transmitting the power signal (A) from the power transmission circuit 212 to the power transmission coil 213. For example, the transmission control circuit 215 may control the power transmission circuit 211 to increase or reduce the voltage and/or frequency of the power signal (A), based on an error value (e.g., included in the control error packet (CEP)) received from the power reception device 202 through the wireless communication circuit 214.

According to an embodiment, the error value (e.g., the CEV) may include a value determined by a difference between a rectified voltage (e.g., V_EC) rectified in the power reception device 202 and a target voltage designated by the power reception device 202. For example, when the difference between the rectified voltage and the target voltage is within a designated error range, the error value may be configured to "0" by the power reception device 202, and accordingly the transmission control circuit 215 may maintain the voltage of the power signal (A) without changing the voltage.

According to an embodiment, the power reception device 202 may transmit a control error packet with a negative control error value to the power transmission device 201 to request a decrease in a level of charging power. The power reception device 202 may transmit a control error packet with a positive control error value to the power transmission device 201 to request an increase in the level of charging power. For example, when the rectified voltage is less than the target voltage (e.g., less than a remainder obtained by subtracting a value representing the error range from the target voltage), the error value may be configured set to a positive number (e.g., "+1") by the power reception device 202, and accordingly the transmission control circuit 215 may increase power (e.g. voltage) of the power signal (A) input to the power transmission coil 213. When the rectified voltage is greater than the target voltage (e.g., greater than a sum of the target voltage and the value of the error range), the error value may be configured to a negative number (e.g., "-1") by the power reception device 202, and accordingly the transmission control circuit 215 may reduce the power of the power signal (A). When receiving a termination signal (e.g., a packet (e.g., CS 100) transmitted by the power reception device 202 when a battery 225 is completely charged) from the power reception device 202 through the power transmission coil 213, the transmission control circuit 215 may control the power transmission circuit 212 to terminate output of the power signal (A) to the power transmission coil 213.

According to an embodiment, the transmission control circuit 215 may determine whether a metallic foreign substance exists between the power transmission device 201 and the power reception device 202, based on a ratio of power (hereinafter, first received power) received by the power reception device 202 from the power transmission device 201 to power (hereinafter, supplied power) supplied by the power transmission device 201 to an external device (e.g., the power reception device 202). According to an embodiment, the transmission control circuit 215 may receive a value (P_Rx) representing the first received power (e.g., power of a power signal (B) received by a power reception circuit 222 from the power transmission device 201 through the power reception coil 221) from the power reception device 202 through the wireless communication circuit 214. For example, while the power reception device 202 charges the battery 225 by using the power signal (B), the power reception device 202 may periodically transmit a first received power packet (RPP) including a first received power value (P_Rx) to the power transmission device 201. The first RPP may include identification information indicating that a device that transmits the first RPP is the power reception device 202 along with the first received power value (P_Rx). The transmission control circuit 215 may determine whether a metallic foreign substance exists between the power transmission device 201 and the power reception device 202, based on power values (P_Tx and P_Rx). For example, the transmission control circuit 215 may identify the first received power value (P_Rx) in the first RPP, and may identify a value (P_Tx) representing supplied power (e.g., the power of the power signal (A)) from the power transmission circuit 212. The transmission control circuit 215 may determine that no metallic foreign substance exists between the two devices 201 and 202 when a loss value (P_Loss), which is a difference (P_Tx - P_Rx) between the two power values, is less than a designated first threshold value (e.g., a first foreign object detection (FOD)_threshold (Th)), and may determine that a metallic foreign substance exists between the two devices 201 and 202 when the loss value (P_Loss) is the first threshold value or greater. When determining that the metallic foreign substance exists, the transmission control circuit 215 may control the power transmission circuit 212 to stop outputting the power signal (A) or to reduce the power of the power signal (A).

The transmission control circuit 215 may add power (hereinafter, second received power) received from an external device (e.g., the power transmission device 201) through a power relay coil 231 to be received by the power relay device 203 and the first received power, and may determine whether a metallic object (foreign substance) exists in addition to the power relay device 203 between the power transmission device 201 and the power reception device 202, based on a ratio of total received power (first received power + second received power) to the supplied power. Here, the power received by the power relay device 203 may be defined as power received by the power relay device 203 from the external device (e.g., the power transmission device 201) through the power relay coil 231 and consumed by the power relay device 203 without being transmitted to the power reception device 202.

According to an embodiment, the transmission control circuit 215 may receive the first received power value (P_Rx) and a second received power value (P_Division) consumed by the power relay device 203 from the power relay device 203 through the wireless communication circuit 214. For example, the power relay device 203 may receive the first RPP from the power reception device 202 through the power relay coil 231. The power relay device 203 may transmit a compensation RPP including the first RPP and the second received power value (e.g., a value representing power of a power signal (C)) (P_Division) to the power transmission device 201 through the power relay coil 231. The compensation RPP may include identification information indicating that a device transmitting the compensation RPP is the power relay device 203 along with the first RPP and the second received power value (P_Division). As the compensation RPP is received following the first RPP, the transmission control circuit 215 may recognize that the power relay device 203 is positioned between the power transmission device 201 and the power reception device 202. Alternatively, the transmission control circuit 215 may recognize that the power relay device 203 is positioned between the power transmission device 201 and the power reception device 202 through the identification information included in the compensation RPP. Accordingly, the transmission control circuit 215 may determine whether there are the power relay device 203 and the metallic object (foreign substance) between the power transmission device 201 and the power reception device 202, based on the power values (P_Tx, P_Rx, and P_Division). For example, the transmission control circuit 215 may identify the first received power value (P_Rx) and the second received power value (P_Division) in the compensation RPP, and may identify the supplied power value (P_Tx) from the power transmission circuit 212. When a sum of the loss value (P_Loss) and the second received power value (P_Division) that represents the difference (P_Tx - P_Rx) between the two power values ((P_Loss + P_Division) = (P_Tx - P_Rx)), is less than a second threshold value, the transmission control circuit 215 may determine that there is only a first object (power relay device 203) between the two devices 201 and 202. When the sum (P_Loss + P_Division) is the second threshold value or greater, the transmission control circuit 215 may determine that a second object (metallic foreign substance) exists in addition to the power relay device 203 between the two devices 201 and 202. When determining that the metallic object (foreign substance) exists in addition to the power relay device 203 between the power transmission device 201 and the power reception device 202, the transmission control circuit 215 may control the power transmission circuit 212 to stop transmitting the power signal (A).

According to an embodiment, the power relay device 203 may transmit a second RPP including the second received power value (P_Division) to the power transmission device 201 through the power relay coil 231. The second RPP may include identification information indicating that a device transmitting the second RPP is the power relay device 203 along with the second received power value (P_Division). As the second RPP is received following the first RPP, the transmission control circuit 215 may recognize that the power relay device 203 is positioned between the power transmission device 201 and the power reception device 202. Alternatively, the transmission control circuit 215 may recognize that the power relay device 203 is positioned between the power transmission device 201 and the power reception device 202 through the identification information included in the second RPP. Accordingly, the transmission control circuit 215 may receive the first RPP from the power reception device 202 and the second RPP from the power relay device 203 through the wireless communication circuit 214. The transmission control circuit 215 may identify the first received power value (P_Rx) from the first RPP, may identify the second received power value (P_Division) from the second RPP, and may identify the supplied power value (P_Tx) from the power transmission circuit 212. When the sum (P_Loss + P_Division) of the loss value (P_Loss) and the second received power value (P_Division), which is the difference between the two power values (P_Tx - P_Rx), is less than the second threshold value, the transmission control circuit 215 may determine that the power relay device 203 exists between the two devices 201 and 202 without a metallic foreign substance. When the sum (P_Loss + P_Division) is the second threshold value or greater, the transmission control circuit 215 may determine that there are the power relay device 203 and the metallic foreign substance between the two devices 201 and 202. When determining that the metallic foreign material exists, the transmission control circuit 215 may control the power transmission circuit 212 to stop transmitting the power signal (A).

A negotiation about a time when the power relay device 203 transmits the RPP is conducted between the power transmission device 201 and the power reception device 202 so that a time when the power transmission device 201 receives the first RPP does not overlap a time when the power transmission device 201 receives the RPP (compensation RPP or second RPP). Alternatively, the power relay device 203 may identify a period in which the first RPP is received from the power reception device 202. The power relay device 203 may periodically transmit the compensation RPP or the second RPP in a time that does not overlap the time when the first RPP is received, based on the identified period.

A RPP to be transmitted by the power relay device 201 among the compensation RPP and the second RPP may be determined through a negotiation between the power transmission device 201 and the power reception device 202. Alternatively, the power relay device 203 may randomly select a RPP to transmit among the compensation RPP and the second RPP.

According to an embodiment, the power reception device 202 may include the power reception coil 221, the power reception circuit 222, the wireless communication circuit 223, a charging circuit 224, the battery 225, and a reception control circuit 226.

According to an embodiment, the power relay device 203 may receive the first received power value (P_Rx), may identify the second received power value (P_Division), and may transmit data related to a third received power value (P_Rx + P_Division), which is a sum of the first received power value and the second received power value, to the power transmission device 201.

The power reception coil 221 may be a spiral coil wound a plurality times in the clockwise or counterclockwise direction around the z-axis (see FIG. 5). The power reception coil 221 may receive a power signal from the power transmission coil 213 through electrical coupling with the power transmission coil 213. The power reception coil 221 may resonate at the same frequency as the frequency at which the power transmission coil 213 resonates. The power reception device 202 may further include a resonance circuit 227 to enable the power reception coil 221 to resonate at a specific frequency (e.g., a frequency specified in the Wireless Power Consortium (WPC) standard).

The power reception circuit 222 may be configured to transmit the power signal (B) received from the power transmission device 201 through the power reception coil 221 to the charging circuit 224. For example, the power reception circuit 220 may include a rectifier circuit that converts a current characteristic of the power signal (B) from an AC to a DC and a DC-DC converter circuit that converts a rectified voltage (V REC), and may output the power signal to the charging circuit 224.

The power reception coil 221 may be used as an antenna for data communication in addition to power reception. The wireless communication circuit 223 may perform data communication with the power transmission device 201 through the power reception coil 221. For example, the wireless communication circuit 223 may receive a data signal from the reception control circuit 226, and may load the received data signal into a power signal received from the power transmission coil 216 to transmit the power signal to the wireless communication circuit 214 of the power transmission device 201. A method for loading the data signal into the power signal may be the technique of modulating the amplitude and/or frequency of the power signal illustrated above. The wireless communication circuit 223 may demodulate a power signal transmitted from the power transmission coil 216 to the power reception coil 221, thereby obtaining a data signal transmitted by the power transmission device 201 to the power reception device 202. The wireless communication circuit 223 may transmit the obtained data signal to the reception control circuit 226.

The charging circuit 224 may charge the battery 225 by using the power signal (B) received from the power reception coil 221 through the power reception circuit 222. For example, the charging circuit 224 may support constant-current (CC) and constant-voltage (CV) charging, based on control of the reception control circuit 226. For example, in a charging mode of a CC mode, the charging circuit 224 may constantly maintain a current of a power signal output from the charging circuit 224 to the battery 225 at a charging current value configured by a processor 226 so that a voltage of the battery 225 increases to a designated target voltage value. When the voltage of the battery 225 reaches the target voltage value and thus the charging mode is changed from the CC mode to a CV mode, the charging circuit 224 may reduce the current of the power signal output from the charging circuit 224 by stages according to control of the reception control circuit 226, thereby maintaining the voltage of the battery 225 at the target voltage value. When the current of the power signal input to the battery 225 is reduced to a designated charging completion current value (e.g., a top off current value) while charging the battery 225 in the CV mode, the charging circuit 224 may stop outputting the power signal to the battery 225 to thereby complete charging of the battery 225, based on control of the reception control circuit 226.

The reception control circuit (e.g., the processor 120 of FIG. 1) 226 may perform data communication with the power transmission device 201 through the wireless communication circuit 223. The reception control circuit 226 may control the power reception circuit 222 to receive the power signal (B) through the power reception coil 221 and may control the charging circuit 224 to charge the battery 225 by using the received power signal (B), based on the data communication.

Referring to FIG. 5, when the power reception device 202 is covered with a protective cover, a distance between the power transmission coil 213 and the power reception coil 221 may be increased by a thickness T of the protective cover. When the distance is increased, even though the power transmission coil 213 and the power reception coil 221 are aligned on an axis 501 parallel with the z-axis as illustrated, electrical coupling between the two coils 213 and 221 may be weakened, thus reducing power reception efficiency of the power reception device 202 and increasing charging time. Electrical coupling between the two coils 213 and 221 may not be achieved, and thus the battery 225 of the power reception device 202 may not be charged. The power relay device 203 including the power relay coil 231 may be mounted on the protective cover. When the power reception device 202 in a state of being covered with the protective cover is aligned with the power transmission device 201, the power relay coil 231 may be positioned between the two coils 213 and 221 and be aligned with the two coils 213 and 221, thus compensating for electrical coupling between the two coils 213 and 221. Accordingly, battery charging may be efficiently performed without inconvenience of removing the protective cover from the power reception device 202.

According to an embodiment, the power relay device 203 may include the power relay coil 231, a power reception circuit 232, the wireless communication circuit 233, a load 234, and a relay control circuit 235.

The power relay coil 231 may be a spiral coil wound a plurality times in the clockwise or counterclockwise direction around the z-axis (see FIG. 5). The power relay coil 231 may receive a power signal from the power transmission coil 213 and may transmit the received power signal to the power reception coil 221 through electrical coupling with the transmission and reception coils 213 and 221. The power relay coil 231 may resonate at the same frequency as the frequency at which the transmission and reception coils 213 and 221resonate. The power relay device 203 may further include a resonance circuit 236 to enable the power relay coil 231 to resonate at a specific frequency (e.g., a frequency specified in the Wireless Power Consortium (WPC) standard).

The power relay device 203 may transmit energy of the power signal received from the power transmission device 201 through the power relay coil 231 to the power reception device 202 , and may consume some of the energy of the power signal to perform data communication with the power transmission and reception devices 201 and 202 and to drive the load 234 included in the power relay device 203.

The power reception circuit 222 may process the power signal (C) received from the power transmission device 201 through the power relay coil 231 to have a predetermined characteristic, and may supply the power signal to the wireless communication circuit 233, the load 234, and the relay control circuit 235. For example, a rectifier 240 of the power reception circuit 222 may convert a current characteristic of the power signal (C) from an AC to a DC. A DC-DC converter 250 may convert a rectified voltage, and may supply the rectified voltage to the wireless communication circuit 233, the load 234, and the relay control circuit 235.

The power relay coil 231 may be used as an antenna for data communication in addition to power transmission and reception. The wireless communication circuit 233 may be driven using power received from the power reception circuit 232. The wireless communication circuit 233 may transmit a data signal received from the power reception device 202 through the power relay coil 231 to the relay control circuit 235. The wireless communication circuit 233 may transmit the data signal received from the relay control circuit 235 to the power transmission device 201 through the power relay coil 231. For example, the wireless communication circuit 233 may include a demodulation circuit that demodulates a power signal transmitted from the power relay coil 231 to the power reception coil 221 to obtain a data signal (e.g., the first RPP or CS 100 Packet) externally transmitted by the power reception device 202. The wireless communication circuit 233 may include a modulation circuit that modulates a power signal transmitted from the power transmission coil 213 to the power relay coil 231 to transmit a data signal (e.g., the compensation RPP or the second RPP) received from the relay control circuit 235 to the power transmission device 201.

The relay control circuit (e.g., a microcontroller unit (MCU)) 235 may be configured as a single chipset along with a memory (not shown). The relay control circuit 235 may be driven using power received from the power reception circuit 222. The relay control circuit 235 may transmit the second received power value (P_Division) to the power transmission device 201 through the wireless communication circuit 233. In an embodiment, the second received power may be a sum of power (a) consumed by the power reception circuit 240 for power processing, power (b) consumed by the wireless communication circuit 233 for data communication, power (c) for the relay control circuit 235 to control an overall system of the power relay device 203, and/or power (d) lost in the power relay device 203. The second received power may further include power (e) consumed by the load 234 when the load 234 operates. In an embodiment, the relay control circuit 235 may transmit the second received power value representing a sum of at least some of the power (a) to the power (e) (e.g., a sum of (a), (b), and (d)) or a sum of (a), (b), (c), and (e) when the load 234 operates) to the power transmission device 201 through the wireless communication circuit 233.

In an embodiment, when the load 234 operates, the relay control circuit 235 may transmit the second received power value representing the power (e) to the power transmission device 201 through the wireless communication circuit 233. When the load 234 does not operate, the relay control circuit 235 may transmit the second received power value representing received power "0" to the power transmission device 201 through the wireless communication circuit 233.

The relay control circuit 235 may periodically receive the first RPP including the first received power value (P_Rx) from the power reception device 202 through the wireless communication circuit 233. The relay control circuit 235 may periodically transmit the compensation RPP including the first RPP and the second received power value (P_Division) to the power transmission device 201 through the wireless communication circuit 233. The relay control circuit 235 may periodically transmit the second RPP including the second received power value (P_Division) to the power transmission device 201 through the wireless communication circuit 233 instead of the compensation RPP.

The relay control circuit 235 may temporally separate the compensation RPP (or the second RPP) from the first RPP. Accordingly, the power transmission device 201 may distinguish the RPPs, and may identify transmitters of the RPPs. The relay control circuit 235 may identify a first RPP having first periodicity from a power signal 600 through the wireless communication circuit 233. Referring to FIG. 6, the first periodicity may mean that a first RPP 601 transmitted by the power reception device 202 periodically occurs from the power signal 600 every first time interval 610 during first duration 611. The relay control circuit 235 may control the wireless communication circuit 233 to load a compensation RPP (or second RPP) 602 having second periodicity temporally separated from the first periodicity into the power signal 600 and to transmit the power signal 600 to the power transmission device 201. The second periodicity may mean that the compensation RPP (or second RPP) periodically occurs from the power signal 600 every second time interval 620 during second duration 621.

The relay control circuit 235 may obtain a data signal from the power signal through the wireless communication circuit 233, and may control driving of the load 234, based on the obtained data signal. The load 234 may be an electronic device driven using power received from the power reception circuit 232, and may be, for example, a display (e.g., an LED display 340 of FIG. 3 or an LED display 440 of FIG. 4) or a cooling fan. When the obtained data signal is a CS 100 packet indicating that the battery is full charged, the relay control circuit 235 may change a display color of the display from a color (e.g., red) indicating that the battery is being charged to a color (e.g. green) indicating that the battery is full charged. When the obtained data signal is a packet indicating that an internal temperature of the power transmission device 201 or the power reception device 202 is increasing or that a heat control operation is required, the relay control circuit 235 may drive the cooling fan.

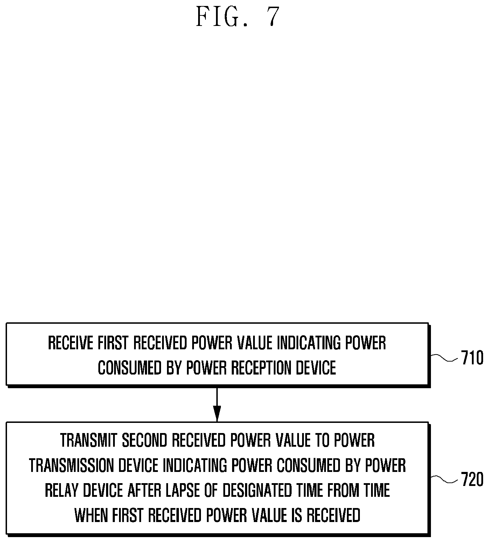

FIG. 7 is a flowchart illustrating operations of the relay control circuit 235 according to an embodiment. As described above, the relay control circuit 235 may be driven using power received from the power reception circuit 240.

In operation 710, the relay control circuit 235 may receive a first received power value (P_Rx) from the power reception device 202 through the wireless communication circuit 233. For example, the first received power value (P_Rx) may be included in a designated packet (e.g., a first RPP) and transmitted from the power reception device 202 to the power transmission device 201. The relay control circuit 235 may obtain the first RPP through the wireless communication circuit 233.

In operation 720, the relay control circuit 235 may transmit a second received power value (P_Division) to the power transmission device 201 through the wireless communication circuit 233 after a lapse of a designated time (e.g., 10 ms) from a time when the first received power value (P_Rx) is received. In an embodiment, the relay control circuit 235 may transmit a compensation RPP including the first RPP and the second received power value (P_Division) to the power transmission device 201 through the wireless communication circuit 233. In another embodiment, the relay control circuit 235 may transmit a second RPP including the second received power value (P_Division) to the power transmission device 201 through the wireless communication circuit 233.

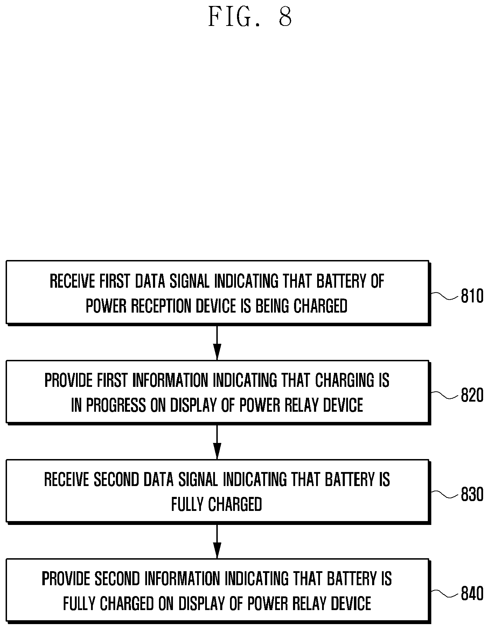

FIG. 8 is a flowchart illustrating operations of the relay control circuit 235 according to an embodiment. As described above, the relay control circuit 235 may be driven using power received from the power reception circuit 240. The load 234 may include a display.

In operation 810, the relay control circuit 235 may receive a first data signal (e.g., a CEP, a RPP, configuration information, or identification information) indicating that the battery 225 of the power reception device 202 is being charged (or starts to be charged) from the wireless communication circuit 233.

In operation 820, the relay control circuit 235 may control the display of the power relay device 203 to provide first information indicating to a user that charging is in progress in response to reception of the first data signal. For example, the relay control circuit 235 may control the display to continuously display the first information (e.g., "charging in progress"). In another example, the relay control circuit 235 may control the display to stop displaying the first information after a lapse of a designated time from a time when the first data signal is received.

In operation 830, the relay control circuit 235 may receive a second data signal (e.g., a CS 100 packet) indicating that the battery 225 is fully charged from the wireless communication circuit 233.

In operation 840, the relay control circuit 235 may control the display of the power relay device 203 to provide second information indicating to the user that the battery is fully charged in response to reception of the second data signal. For example, the relay control circuit 235 may control the display to continuously display the second information (e.g., "charging completed"). In another example, the relay control circuit 235 may control the display to stop displaying the second information after a lapse of a designated time from a time when the second data signal is received.

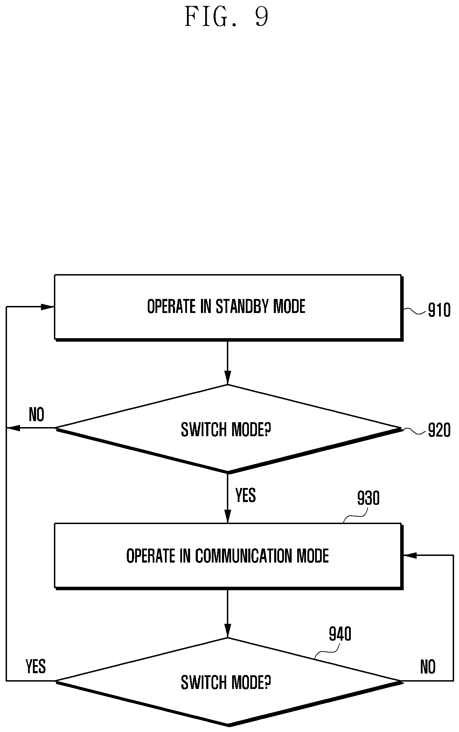

FIG. 9 is a flowchart illustrating operations of the relay control circuit 235 according to an embodiment. As described above, the relay control circuit 235 may be driven using power received from the power reception circuit 240.

In operation 910, the relay control circuit 235 may operate in a standby mode. In the standby mode, the relay control circuit 235 may deactivate the load 234 and/or the wireless communication circuit 233, and may monitor a rectified voltage (V_Rect) (e.g., a voltage of a power signal input from the rectifier 240 to the converter 250) in real time. Here, "mode" is a term used to define a method in which the relay control circuit 235 operates, and may be interchangeable with, for example, "state".

In operation 920, the relay control circuit 235 may determine whether to switch an operation mode of the relay control circuit 235 from the standby mode to a communication mode (or control mode or activation mode), based on the monitored rectified voltage.

When the rectified voltage is a first voltage value (e.g., 5V) or greater, the relay control circuit 235 may operate in the communication mode in operation 930. When switched to the communication mode, the relay control circuit 235 may continue to monitor the rectified voltage, and may activate the wireless communication circuit 233 to identify what data is exchanged between the power transmission device 201 and the power reception device 202. In the communication mode, when a first RPP (including a first received power value (P_Rx)) is identified through the wireless communication circuit 233, the relay control circuit 233 may transmit a second received power value (P_Division) to the power transmission device 201 through the wireless communication circuit 233 after a lapse of a designated time (e.g., 10 ms) from a time when the first received power value (P_Rx) is identified. In the communication mode, when a first data signal is identified through the wireless communication circuit 233, the relay control circuit 235 may control a display of the power relay device 203 to provide first information. In the communication mode, when a second data signal is identified through the wireless communication circuit 233, the relay control circuit 235 may control the display of the power relay device 203 to provide second information.

In operation 940, the relay control circuit 235 may determine whether to switch the operation mode of the relay control circuit 235 from the communication mode to the standby mode, based on the monitored rectified voltage. When the rectified voltage is a second voltage value (e.g., 3V) or less, the relay control circuit 235 may switch to the standby mode.

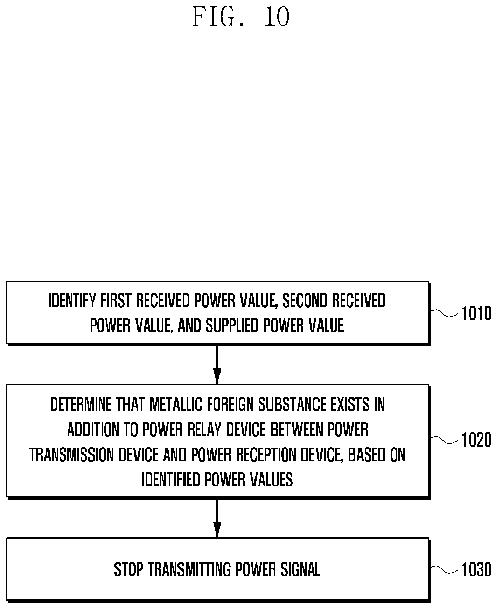

FIG. 10 is a flowchart illustrating operations of the transmission control circuit 215 according to an embodiment. The operations of FIG. 10 may be performed while the power transmission device 201 supplies power to the power reception device 202.

In operation 1010, the transmission control circuit 215 may identify a first received power value (P_Rx) and a second received power value (P_Division) from the wireless communication circuit 214, and may identify a supplied power value (P_Tx) from the power transmission circuit 212. According to an embodiment, the transmission control circuit 215 may sequentially receive a first RPP and a compensation RPP from the wireless communication circuit 214. The transmission control circuit 215 may identify the first received power value (P_Rx) and the second received power value (P_Division) in the compensation RPP received later than the first RPP. According to another embodiment, the transmission control circuit 215 may sequentially receive a first RPP and a second RPP from the wireless communication circuit 214. The transmission control circuit 215 may identify the first received power value (P_Rx) in the first RPP and the second received power value (P_Division) in the second RPP.

In operation 1020, the transmission control circuit 215 may determine that a metallic foreign substance exists in addition to the power relay device 203 between the power transmission device 201 and the power reception device 202, based on the power values (P_Tx, P_Rx, and P_Division). For example, when a sum (P_Loss + P_Division) of a loss value (P_Loss), which is a difference (P_Tx - P_Rx) between the two power values, and the second received power value (P_Division) is greater than a designated threshold value, the transmission control circuit 215 may determine that a metallic foreign substance exists in addition to the power relay device 203 between the two devices 201 and 202.

In operation 1030, when determining that the metallic foreign substance exists in addition to the power relay device 203 between the two devices 201 and 202, the transmission control circuit 215 may control the power transmission circuit 212 to stop transmitting a power signal.

According to an embodiment, a power relay device (e.g., the power relay device 203 of FIG. 2) may be mounted on a cover that covers a portable power reception device, and may include: a coil; a power reception circuit configured to rectify a power signal received from a power transmission device through the coil; a wireless communication circuit configured to be driven using the power signal received from the power reception circuit and to communicate with the power transmission device and the power reception device by using the coil; and a relay control circuit (e.g., the relay control circuit 235 of FIG. 2) configured to be driven using the power signal received from the power reception circuit and electrically connected to the power reception circuit and the wireless communication circuit. The relay control circuit may be configured to receive a first received power value indicating power consumed by the power reception device from the wireless communication circuit. The relay control circuit may be configured to transmit a second received power value indicating power consumed by the power relay device to the power transmission device by using the wireless communication circuit, based on receiving the first received power value.

The power relay device may further include a load (e.g., the load 234 of FIG. 2) configured to be driven using the power signal received from the power reception circuit, wherein the relay control circuit may be configured to include a value indicating power consumed by the load in the second power received power value.

The load may include a display. The relay control circuit may be configured to control the display, based on a data signal identified through the wireless communication circuit. The relay control circuit may be configured to identify a first data signal indicating that a battery of the power reception device is being charged from the wireless communication circuit. The relay control circuit may be configured to display first information corresponding to the first data signal on the display. The relay control circuit may be configured to identify a second data signal indicating that the battery is fully charged from the wireless communication circuit. The relay control circuit may be configured to display second information corresponding to the second data signal on the display.

The relay control circuit may be configured to receive a first received power packet (RPP) including the first received power value from the wireless communication circuit. The relay control circuit may be configured to transmit a compensation RPP including the first RPP and the second received power value.

The relay control circuit may be configured to transmit a second received power packet (RPP) including the second received power value to the power transmission device through the wireless communication circuit when receiving a first RPP including the first received power value from the wireless communication circuit.

According to an embodiment, a power transmission device (e.g., the power transmission device 201 of FIG. 2) may include: a coil; a power transmission circuit configured to convert a power signal into a power signal having a designated frequency and to output the power signal to the coil; a wireless communication circuit configured to communicate with a power reception device and a power relay device by using the coil; and a transmission control circuit (e.g., the transmission control circuit 215 of FIG. 2) electrically connected to the power transmission circuit and the wireless communication circuit. The transmission control circuit may be configured to identify a supplied power value indicating power that the power transmission device supplies to the power reception device. The transmission control circuit may be configured to identify a first received power value indicating power consumed by the power reception device and a second received power value indicating power consumed by the power relay device from the wireless communication circuit. The transmission control circuit may be configured to determine that a metallic foreign substance exists in addition to the power relay device between the power transmission device and the power reception device, based on the supplied power value, the first received power value, and the second received power value. The transmission control circuit may be configured to control the power transmission circuit to stop outputting the power signal based on the determination.

The transmission control circuit may be configured to receive a first RPP from the power reception device and subsequently a compensation RPP from the power relay device through the wireless communication circuit. The transmission control circuit may be configured to identify the first received power value and the second received power value from the compensation RPP received later than the first RPP.

The transmission control circuit may be configured to receive a first RPP from the power reception device and subsequently a second RPP from the power relay device through the wireless communication circuit. The transmission control circuit may be configured to identify the first received power value from the first RPP, and identify the second received power value from the second RPP.

According to an embodiment, a power relay device may be mounted on a cover covering a portable power reception device, may include a coil, and may be driven using a power signal received from a power transmission device through the coil. A method for operating the power relay device may include receiving a first received power value indicating power consumed by the power reception device from the power reception device through the coil (e.g., operation 710). The method may include transmitting a second received power value indicating power consumed by the power relay device to the power transmission device through the coil, based on receiving the first received power value (e.g., operation 720).

The power relay device may include a display, and the method may further include controlling the display, based on a data signal identified through the wireless communication circuit. The controlling of the display may include: receiving a first data signal indicating that a battery of the power reception device is being charged from the power reception device through the coil; displaying first information corresponding to the first data signal on the display; receiving a second data signal indicating that the battery is fully charged from the power reception device through the coil; and displaying second information corresponding to the second data signal on the display.

The receiving may include receiving a first received power packet (RPP) including the first received power value from the power reception device through the coil, and the transmitting may include transmitting a compensation RPP including the first RPP and the second received power value to the power transmission device through the coil.

The transmitting may include transmitting a second received power packet (RPP) including the second received power value to the power transmission device through the coil when receiving a first RPP including the first received power value from the wireless communication circuit.

According to an embodiment, a method for operating a power transmission device that wirelessly transmits a power signal to a power reception device through a coil may include identifying a supplied power value indicating power that the power transmission device supplies to the power reception device (e.g., operation 1010). The method may include identifying a first received power value indicating power consumed by the power reception device and a second received power value indicating power consumed by a power relay device through a wireless communication circuit of the power transmission device (e.g., operation 1010). The method may include determining that a metallic foreign substance exists in addition to the power relay device between the power transmission device and the power reception device, based on the supplied power value, the first received power value, and the second received power value (e.g., operation 1020). The method may include stopping outputting the power signal based on the determination (e.g., operation 1030).

The identifying of the first received power value and the second received power value may include: receiving a first RPP from the power reception device and subsequently a compensation RPP from the power relay device through the wireless communication circuit; and identifying the first received power value and the second received power value from the compensation RPP received later than the first RPP.

The identifying of the first received power value and the second received power value may include: receiving a first RPP from the power reception device and subsequently a second RPP from the power relay device through the wireless communication circuit; identifying the first received power value from the first RPP; and identifying the second received power value from the second RPP.

According to an embodiment, a recording medium may store instructions readable by a processor of a power transmission device that wirelessly transmits a power signal to a power reception device through a coil. When executed by the processor, the instructions may cause the processor to perform an operation of identifying a supplied power value indicating power that the power transmission device supplies to the power reception device. The instructions may cause the processor to perform an operation of identifying a first received power value indicating power consumed by the power reception device and a second received power value indicating power consumed by a power relay device through a wireless communication circuit of the power transmission device. The instructions may cause the processor to perform an operation of determining that a metallic foreign substance exists in addition to the power relay device between the power transmission device and the power reception device, based on the supplied power value, the first received power value, and the second received power value. The instructions may cause the processor to perform an operation of stopping outputting the power signal based on the determination.

## Claims

1. A power relay device mounted on a cover that covers a portable power reception device, the power relay device comprising:
a coil;
a power reception circuit configured to rectify a power signal received from a power transmission device through the coil;
a wireless communication circuit configured to be driven using the power signal received from the power reception circuit and to communicate with the power transmission device and the power reception device using the coil; and
a relay control circuit configured to be driven using the power signal received from the power reception circuit and electrically connected to the power reception circuit and the wireless communication circuit,
wherein the relay control circuit is configured to:
receive a first received power value indicating power consumed by the power reception device from the wireless communication circuit; and
transmit a second received power value indicating power consumed by the power relay device to the power transmission device using the wireless communication circuit, based on receiving the first received power value.

2. The power relay device of claim 1, further comprising a load configured to be driven using the power signal received from the power reception circuit,
wherein the relay control circuit is configured to comprise a value indicating power consumed by the load in the second power received power value.

3. The power relay device of claim 2, wherein the load comprises a display.

4. The power relay device of claim 3, wherein the relay control circuit is configured to control the display, based on a data signal identified through the wireless communication circuit.

5. The power relay device of claim 4, wherein the relay control circuit is configured to:
identify a first data signal indicating that a battery of the power reception device is being charged from the wireless communication circuit;
display first information corresponding to the first data signal on the display;
identify a second data signal indicating that the battery is fully charged from the wireless communication circuit; and
display second information corresponding to the second data signal on the display.

6. The power relay device of claim 1, wherein the relay control circuit is configured to:
receive a first received power packet (RPP) comprising the first received power value from the wireless communication circuit; and
transmit a compensation RPP comprising the first RPP and the second received power value to the power transmission device through the wireless communication circuit.

7. The power relay device of claim 1, wherein the relay control circuit is configured to transmit a second received power packet (RPP) comprising the second received power value to the power transmission device through the wireless communication circuit based on receiving a first RPP comprising the first received power value from the wireless communication circuit.

8. A power transmission device comprising:
a coil;
a power transmission circuit configured to convert a power signal into a power signal having a designated frequency and to output the power signal to the coil;
a wireless communication circuit configured to communicate with a power reception device and a power relay device using the coil; and
a transmission control circuit electrically connected to the power transmission circuit and the wireless communication circuit,
wherein the transmission control circuit is configured to:
identify a supplied power value indicating power that the power transmission device supplies to the power reception device;
identify a first received power value indicating power consumed by the power reception device and a second received power value indicating power consumed by the power relay device from the wireless communication circuit;
determine that a metallic foreign substance exists in addition to the power relay device between the power transmission device and the power reception device, based on the supplied power value, the first received power value, and the second received power value; and
control the power transmission circuit to stop outputting the power signal based on the determination.

9. The power transmission device of claim 8, wherein the transmission control circuit is configured to:
receive a first RPP from the power reception device and subsequently a compensation RPP from the power relay device through the wireless communication circuit; and
identify the first received power value and the second received power value from the compensation RPP received later than the first RPP.

10. The power transmission device of claim 8, wherein the transmission control circuit is configured to:
receive a first RPP from the power reception device and subsequently a second RPP from the power relay device through the wireless communication circuit;
identify the first received power value from the first RPP; and
identify the second received power value from the second RPP.

11. A method of operating a power relay device that is mounted on a cover covering a portable power reception device, comprises a coil, and is driven using a power signal received from a power transmission device through the coil, the method comprising:
receiving a first received power value indicating power consumed by the power reception device from the power reception device through the coil; and
transmitting a second received power value indicating power consumed by the power relay device to the power transmission device through the coil, based on receiving the first received power value.

12. The method of claim 11, wherein the power relay device comprises a display, and
wherein the method further comprises controlling the display, based on a data signal identified through a wireless communication circuit.

13. The method of claim 11, wherein the receiving comprises receiving a first received power packet (RPP) comprising the first received power value from the power reception device through the coil, and
wherein the transmitting comprises transmitting a compensation RPP comprising the first RPP and the second received power value to the power transmission device through the coil.

14. The method of claim 11, wherein the transmitting comprises transmitting a second received power packet (RPP) comprising the second received power value to the power transmission device through the coil based on receiving a first RPP comprising the first received power value from a wireless communication circuit.

15. A method of operating a power transmission device that wirelessly transmits a power signal to a power reception device through a coil, the method comprising:
identifying a supplied power value indicating power that the power transmission device supplies to the power reception device;
identifying a first received power value indicating power consumed by the power reception device and a second received power value indicating power consumed by a power relay device through a wireless communication circuit of the power transmission device;
determining that a metallic foreign substance exists in addition to the power relay device between the power transmission device and the power reception device, based on the supplied power value, the first received power value, and the second received power value; and
stopping outputting the power signal based on the determination.
